# EUROPÄISCHE PATENTSCHRIFT

(11) **EP 2 743 125 B1**
(45) Veröffentlichungstag und Bekanntmachung des Hinweises auf die Patenterteilung: **25.07.2018**
(21) Anmeldenummer: 13196308.4
(22) Anmeldetag: 09.12.2013
(51) Int. Cl.: B60N 2/50, B60N 2/16

(54) **Fahrzeugsitz**
Vehicle seat
Siège de véhicule

(30) Priorität: 12.12.2012 DE 102012112138
(43) Veröffentlichungstag der Anmeldung: 18.06.2014
(73) Patentinhaber: GRAMMER AG, 92224 Amberg (DE)
(72) Erfinder: Lorey, Alexander, 93142 Maxhütte-Haidhof (DE)
(74) Vertreter: Hannke, Christian

(56) Entgegenhaltungen:
- EP-A1- 0 921 962
- EP-A1- 1 924 462
- FR-A5- 2 201 659
- US-A1- 2002 130 528

## Beschreibung

Die Erfindung betrifft einen Fahrzeugsitz umfassend ein Sitzunterteil, sowie eine zwischen einem Sitzoberteil und dem Sitzunterteil angeordnete, höhenverstellbare Sitzverbindungseinheit, welche das Sitzunterteil mit dem Sitzoberteil mechanisch miteinander verbindet, gemäß dem Oberbegriff des Patentanspruchs 1.

Fahrzeugsitze mit einer zwischen dem Sitzunterteil und dem Sitzoberteil angeordneten, höhenverstellbaren Sitzverbindungseinheit sind in verschiedenster Weise bekannt. Innerhalb eines Fahrzeugs ist jedoch eine Kopffreiheit eines Fahrers nach oben hin begrenzt ist. Zudem ist ein Abstand zu einem Boden und Pedalen des Fahrzeuges für Fahrer geringer Größe oftmals bei großen Ausfederungen des Fahrzeugsitzes zu groß.

Dies führt zu dem Problem, dass im Falle eines maximalen Ausfederns des Fahrzeugsitzes eines beispielsweise PKWs, der Fahrer Gefahr laufen kann, sich wegen der eingeschränkten Kopffreiheit an einer Decke der Fahrzeugkanzlei anzustoßen und sich dadurch beispielsweise Kopfverletzungen zuzuziehen. Ebenso ist denkbar, dass bei einem besonders starken, beispielsweise maximalen, Ausfedern des Sitzoberteils die Beine des Fahrers zumindest Gefahr laufen zwischen dem Lenkrad und dem Fahrzeugsitz eingeklemmt zu werden. Falls es sich bei dem Fahrer um eine eher kleine Person handelt, kann die maximale Ausfederung des Fahrzeugsitzes dazu führen, dass der Fahrer den Kontakt zu dem Boden und den Pedalen des Fahrzeuges verliert.

US 2002/130528 A1 zeigt ein Anbindesystem für einen Fahrzeugsitz, um unerwünschte Bewegungen des Sitzes gegenüber dem Fahrzeug zu vermeiden. Das System umfasst eine Spannvorrichtung welche eine Aufwickeleinrichtung mit einer Kraft beaufschlägt, so dass der Gurt immer gestrafft ist.

EP 0 921 962 A1 beschreibt einen Fahrzeugsitz mit einer Vorrichtung, die fähig ist den Sitz bei einer Höhe zu blockieren und die Sitzbewegung zu hemmen, wenn er einer starken Beschleunigung ausgesetzt ist. Die Vorrichtung umfasst eine Blockiervorrichtung und einen Gurt, der auf einer Rolle aufgerollt ist. Die Gurtrolle ist mit Federelementen ausgestattet, so dass der Gurt kontinuierlich einer Kraft ausgesetzt ist, die den Gurt aufspult. Wird der Gurt plötzlich herausgezogen, setzt eine Blockiervorrichtung ein und blockiert die Rolle.

Demzufolge ist es Aufgabe der Erfindung einen Fahrzeugsitz anzugeben, bei dem eine vorgebbare Begrenzung der Ausfederung des Fahrzeugsitzes besonders einfach und kostengünstig realisiert ist, um die oben genannten Probleme zu vermeiden.

Um nun einen Fahrzeugsitz anzugeben, bei dem die Ausfederung des Fahrzeugsitzes begrenzt ist und welcher sowohl kostengünstig als auch einfach im Aufbau ist, macht der hier beschriebene Fahrzeugsitz unter anderem von der Idee Gebrauch, zumindest eine Schwingbegrenzungseinrichtung zum Begrenzen einer vertikalen Schwingbewegung des Sitzoberteiles in einer Richtung weg von dem Sitzunterteil, also eine Ausfederung oder Auslenkung des Fahrzeugsitzes, zu begrenzen. Dazu weist die Schwingbegrenzungseinrichtung zumindest ein Abrollelement auf, mittels dessen die Schwingbegrenzungseinrichtung über sein freies, abrollbares Abrollende des Abrollelementes mechanisch fest am Sitzunterteil befestigt ist. Überschreitet nun das Sitzoberteil eine vorgebbare Abrolllänge, welche stets kleiner ist als die maximale Ausfederung des Fahrzeugsitzes, begrenzt das Abrollelement die Ausfederung des Sitzoberteiles dämpfungsfrei. Insofern wird vermieden, dass große Fahrer beispielsweise mit dem Kopf gegen eine Decke des Fahrzeuges schlagen und ermöglicht, dass kleine Fahrer stets den Kontakt zum Fahrzeugboden und den Pedalen halten können.

Gemäß zumindest einer Ausführungsform umfasst der Fahrzeugsitz ein Sitzunterteil, sowie eine zwischen einem Sitzoberteil und dem Sitzunterteil angeordnete, höhenverstellbare Sitzverbindungseinheit, welche das Sitzunterteil mit dem Sitzoberteil mechanisch miteinander verbindet. Zudem umfasst der Fahrzeugsitz erfindungsgemäß zumindest eine Schwingbegrenzungseinrichtung, zum Begrenzen einer vertikalen Schwingbewegung des Sitzoberteils, in einer Richtung weg von dem Sitzunterteil, welche zwischen dem Sitzunterteil und dem Sitzoberteil angeordnet, und fest mit dem Sitzoberteil verbunden ist, wobei die Schwingbegrenzungseinrichtung zumindest ein Abrollelement aufweist, welches mit seinem freien, abrollbaren Abrollende mechanisch fest am Sitzunterteil befestigt ist. Das Abrollelement weist eine vorgebbare Abrolllänge auf, und die Abrolllänge legt eine maximale Auslenkhöhe in vertikaler Richtung, in Richtung weg von dem Sitzunterteil, des Sitzoberteils fest, wobei die Schwingbegrenzungseinrichtung dazu eingerichtet und dazu vorgesehen ist eine Bewegung des Sitzoberteils in vertikaler Richtung, in Richtung weg von dem Sitzunterteil, nach dem Abrollen der vorgebbaren Abrolllänge dämpfungsfrei zu begrenzen.

Gemäß zumindest einer Ausführungsform umfasst der Fahrzeugsitz ein Sitzunterteil, sowie eine zwischen einem Sitzoberteil und dem Sitzunterteil angeordnete höhenverstellbare Sitzverbindungseinheit, welche das Sitzunterteil mit dem Sitzoberteil mechanisch miteinander verbindet. Insbesondere kann es sich bei der Sitzverbindungseinheit um eine Federungseinheit handeln, welche eine Auslenkung des Sitzoberteiles in Richtung hin zum Sitzunterteil und/oder in Richtung weg vom Sitzunterteil dämpft.

Erfindungsgemäß umfasst der Fahrzeugsitz zumindest eine Schwingbegrenzungseinrichtung, zum Begrenzen einer vertikalen Schwingbewegung des Sitzoberteiles, in einer Richtung weg von dem Sitzunterteil. Dabei ist die Schwingbegrenzungseinrichtung zwischen dem Sitzunterteil und dem Sitzoberteil angeordnet und fest mit dem Sitzoberteil verbunden. "Fest" heißt in diesem Zusammenhang, dass die Schwingbegrenzungseinrichtung beispielsweise an dem Sitzoberteil lösbar angeschraubt oder in sonstiger Weise in das Sitzoberteil integriert ist. Mit anderen Worten begrenzt die Schwingbegrenzungseinrichtung eine Auslenkung in Richtung weg von dem Sitzunterteil und wirkt daher als ein Höhenbegrenzer des Sitzoberteiles relativ zum Sitzunterteil.

Erfindungsgemäß weist die Schwingbegrenzungseinrichtung zumindest ein Abrollelement auf, welches mit seinem freien, abrollbaren Abrollende mechanisch fest am Sitzunterteil befestigt ist. Dazu ist das Abrollelement beispielsweise lösbar in eine Einhakvorrichtung des Sitzunterteiles eingerastet und/oder verknotet. Das jeweils andere Ende des Abrollelementes bleibt dabei fest mit der Schwingbegrenzungseinrichtung verbunden, so dass nach einem zumindest teilweisen Abrollen des Abrollelementes das Sitzunterteil und das Sitzoberteil über das Abrollelement miteinander verbunden sind. Vorzugsweise begrenzt dabei das Abrollelement eine Bewegung in vertikaler Richtung des Sitzoberteiles nur in Richtung weg von dem Sitzunterteil. Insbesondere kann das Abrollelement bei einer vertikalen Bewegung des Sitzoberteiles in Richtung hin zu dem Sitzunterteiles stauchbar und/oder einrollbar sein. "Vertikale Richtung" ist dabei eine Richtung senkrecht zu einer Haupterstreckungsebene des Sitzunterteils.

Weiter erfindungsgemäß weist das Abrollelement eine vorgebbare Abrolllänge auf, wobei die Abrolllänge eine maximale Auslenkhöhe in vertikaler Richtung, in Richtung weg von dem Sitzunterteil, des Sitzoberteiles festlegt. Mit anderen Worten handelt es sich bei der vorgebbaren Abrolllänge um eine maximale Auslenkung des Sitzoberteiles relativ zum Sitzunterteil in Richtung weg von dem Sitzunterteil. Die Abrolllänge definiert daher eine Höhenauslenkung des Sitzoberteiles.

Darüber hinaus ist erfindungsgemäß die Schwingbegrenzungseinrichtung dazu eingerichtet und dazu vorgesehen, eine Bewegung des Sitzoberteiles in vertikaler Richtung, in Richtung weg von dem Sitzunterteil, nach dem Abrollen der vorgebbaren Abrolllänge, dämpfungsfrei zu begrenzen. "Dämpfungsfrei" heißt in diesem Zusammenhang, dass nach dem vollständigen Abrollen bis zur Abrolllänge die Bewegung des Sitzoberteiles in Richtung weg von dem Sitzunterteil durch die Schwingbegrenzungseinrichtung, insbesondere durch das Abrollelement, ohne Verwendung zusätzlicher Dämpfungselemente gestoppt wird. Mit anderen Worten ist die Begrenzungsfunktion des Abrollelementes bis auf dem Abrollelement selbst innenwohnende, intrinsische dämpfende oder elastische Dehneigenschaften abrupt.

Gemäß zumindest einer Ausführungsform ist das Abrollelement mit einem abrollbaren Gurt gebildet, welcher abrollbar auf einem Abrollzylinder des Abrollelementes um eine Abrollachse auf- oder abwickelbar ist. Beispielsweise handelt es sich bei dem Gurt um einen Fahrzeuggurt. Ein derartiges Abrollelement kann besonders einfach und kostengünstig aufgebaut sein. Dazu kann das Gurtende einfach mit dem Sitzunterteil verbunden werden, wodurch das Abrollelement zumindest teilweise abgerollt ist. Bewegt sich das Sitzoberteil zusammen mit der Schwingbegrenzungseinrichtung in Richtung weg von dem Sitzunterteil, beginnt sich der Gurt bis zur Abrolllänge zu entrollen.

Gemäß zumindest einer Ausführungsform umfasst die Schwingbegrenzungseinrichtung eine Drehfeder, welche dazu eingerichtet und dazu vorgesehen ist, den Abrollzylinder mit einem Torsionsdrehmoment zu beaufschlagen, welches der vertikalen Bewegung des Sitzoberteiles in Richtung weg von dem Sitzunterteil entgegenwirkt. Die Drehfeder kann dazu in den Abrollzylinder parallel zur Abrollachse eingebracht oder in den Abrollzylinder einwirkbar angeordnet sein, wobei mittels des Torsionsdrehmomentes das Abrollelement beispielsweise im Falle eines Gurtes vorzugsweise stets gespannt ist. Mit anderen Worten ermöglicht eine Einstellung des Torsionsdrehmoments mittels der Drehfeder, dass der Gurt während der Federbewegungen nicht schlaff zwischen dem Sitzoberteil und dem Sitzunterteil verläuft. Bei einer Bewegung des Sitzoberteiles in Richtung des Sitzunterteils ermöglicht das Torsionsdrehmoment weiterhin, dass der Gurt von dem Abrollzylinder aufgerollt wird und sich bei einer umgekehrten Bewegung des Sitzoberteiles in Richtung weg von dem Sitzunterteil wieder bis zu der vorgebbaren Abrolllänge entrollt. Insofern kann ein Gurtstraffer realisiert sein.

Gemäß zumindest einer Ausführungsform umfasst die Schwingbegrenzungseinrichtung ein Einstellmittel, welches dazu eingerichtet und dazu vorgesehen ist, die Abrolllänge vorgebbar einzustellen und dämpfungsfrei zu begrenzen. Vorteilhaft kann mittels des Einstellmittels, welches beispielsweise in den Ab- und/oder Aufrollvorgang des Abrollzylinders eingreift, die Abrolllänge möglichst individuell an die Bedürfnisse des jeweiligen Fahrers und dessen Größenverhältnisse angepasst, das heißt eingestellt, werden.

Erfindungsgemäß umfasst das Einstellelement eine Vorspannfeder und einen einrastbaren Griff, wobei die Vorspannfeder den Griff mit einem Zug oder Druck entlang einer Einstellachse des Einstellmittels beaufschlagt. Dabei ist der Griff entlang der Einstellachse durch Beaufschlagung eines äußeren Zugs oder Drucks auf den Griff in Richtung hin oder weg von der Vorspannfeder in einem Zu-Modus und in einem Offen-Modus betreibbar. Im Offen-Modus ist die Abrolllänge einstellbar und im Zu-Modus ist die Abrolllänge durch ein Einrasten des Griffes in eine Einrastvorrichtung fixiert. Dabei heißt "äußerer Zug oder Druck" ein von beispielsweise einem Fahrer, daher insbesondere nicht von der Vorspannfeder, auf den Griff ausgeübter Druck. Vorzugsweise umfasst das Einstellmittel auch die Einrastvorrichtung. Zum Einstellen einer maximalen Auslenkung des Sitzoberteiles relativ zum Sitzunterteil ist denkbar, dass sich der Fahrer zunächst auf das Sitzoberteil mit seinem Gewicht platziert und währenddessen den mit Druck beaufschlagten Griff zunächst in den Auf-Modus in Richtung weg von sich zieht, wodurch das Abrollelement frei wird und sich beispielsweise der Gurt mittels des Torsionsdrehmoments von selbst entsprechend des Gewichts oder des Druckes des Fahrers bis zu einer gewünschten Abrolllänge einrollt. Nach der Bestimmung der Abrolllänge kann der Griff durch den Fahrer beispielsweise über ein Zusammendrücken der Vorspannfeder, also ein Drücken des Griffs in Richtung der Vorspannfeder, eingerastet werden. Beaufschlagt die Vorspannfeder den Griff im Offen-Modus mit einem Zug, kann nach dem Einstellen der gewünschten Abrolllänge der Griff einfach losgelassen werden und von selbst in den Zu-Modus Einrasten. Durch das Einrasten des Griffs ist die Abrolllänge über die Einrastvorrichtung fixiert.

Gemäß zumindest einer Ausführungsform weist die Schwingbegrenzungseinrichtung ein Lager auf, in dem das Abrollelement und das Einstellmittel angeordnet sind, wobei in dem Lager das Abrollelement drehbar in der Abrollachse geführt ist und das Einstellmittel, in das Abrollelement eingreifbar, angeordnet ist. Vorzugsweise handelt es sich bei dem Lager um ein einstückiges Element, über das sowohl das Abrollelement als auch das Einstellmittel fest miteinander verbunden sind. Mit anderen Worten dient das Lager sowohl als Halterung für das Einstellmittel und das Abrollelement als auch vorzugsweise zur Befestigung der gesamten Schwingbegrenzungseinrichtung an dem Sitzoberteil.

Gemäß zumindest einer Ausführungsform ist die Sitzverbindungseinheit mit einem Scherengestell mit zumindest zwei Scherenarmen gebildet. Ein derartiges Scherengestell ist besonders einfach und kostengünstig herstellbar und zeigt geringe Verschleißerscheinungen.

Im Folgenden wird der hier beschriebene Fahrersitz anhand eines Ausführungsbeispiels und den dazugehörigen Figuren näher erläutert.

Die Figuren 1, 2, 3 und 4 zeigen in verschiedenen perspektivischen Ansichten ein Ausführungsbeispiel eines hier beanspruchten Fahrzeugsitzes.

Die Figuren 5, 6 und 7 zeigen in perspektivischen Ansichten ein Ausführungsbeispiel einer hier beschriebenen Schwingbegrenzungseinrichtung.

In den Ausführungsbeispielen und in den Figuren sind gleiche oder gleich wirkende Bestandteile jeweils mit den gleichen Bezugszeichen versehen. Die dargestellten Elemente sind nicht als maßstabsgerecht anzusehen, vielmehr können einzelne Elemente zum besseren Verständnis übertrieben groß dargestellt sein.

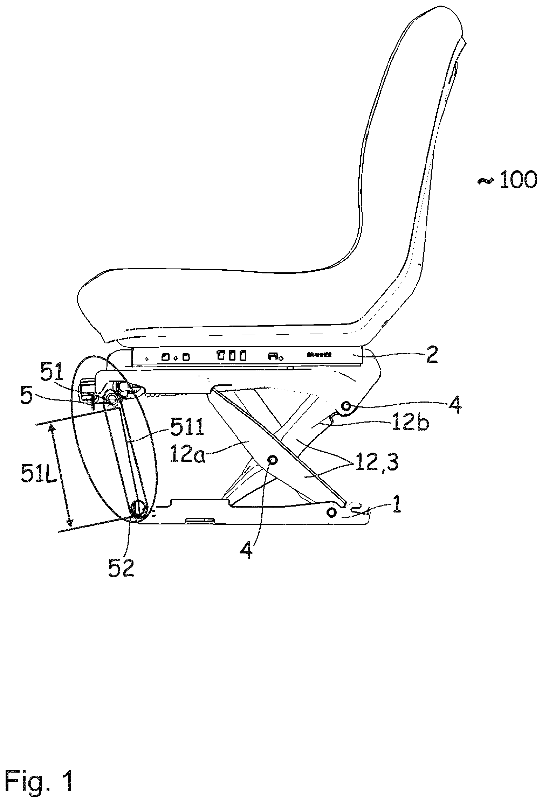

In der Figur 1 ist anhand einer schematischen Seitenansicht ein hier beschriebener Fahrzeugsitz 100 mit einem Sitzunterteil 1 sowie einem zwischen einem Sitzoberteil 2 und dem Sitzunterteil 1 angeordneten, höhenverstellbaren Scherengestell 12 als eine Sitzverbindungseinheit 3 gezeigt. Das Scherengestell 12 ist an Montagepunkten 4 mit dem Sitzunterteil 1 und dem Sitzoberteil 2 mechanisch fest verbunden. Dabei weist das Scherengestell 12 zwei Scherenarme 12a, 12b auf. Zudem umfasst der Fahrzeugsitz 100 eine Schwingbegrenzungseinrichtung 5 zum Begrenzen einer vertikalen Schwingbewegung des Sitzoberteils 2 in einer Richtung weg von dem Sitzunterteil 1. Dabei ist die Schwingbegrenzungseinrichtung 5 zwischen dem Sitzunterteil 1 und dem Sitzoberteil 2 angeordnet und fest mit dem Sitzoberteil 2 verbunden. Die Schwingbegrenzungseinrichtung 5 weist ein Abrollelement 51 auf, welches mit seinem freien, abrollbaren Abrollende 52 mechanisch fest am Sitzunterteil 1 befestigt ist. Bei dem Abrollelement 51 handelt es sich um einen Gurt 511, der ab- und aufrollbar auf einem Abrollzylinder 512 des Abrollelementes 51 um eine Abrollachse 51A teilweise aufgewickelt ist. Dabei ist das Abrollelement 51, insbesondere der Gurt 511, um eine vorgebbare Abrolllänge 51L abgewickelt. Die vorgebbare Abrolllänge 51L ist also eine maximale Auslenkhöhe in vertikaler Richtung des Sitzoberteiles 2. Wird nun das Sitzoberteil 2 während des Fahrens in Richtung weg von dem Sitzunterteil 1 maximal ausgelenkt, begrenzt der Gurt 511 die Auslenkung dämpfungsfrei, das heißt abrupt, bevor das Sitzoberteil 2 eine maximale Auslenkung durch das Scherengestell 12 erreicht hat.

Zudem umfasst die Schwingbegrenzungseinrichtung 5 eine Drehfeder 6. Mittels der Drehfeder 6, welche eingreifbar an dem Abrollzylinder 512 angeordnet ist, wird der Abrollzylinder 512 mit einem Torsionsdrehmoment beaufschlagt, welches der vertikalen Richtung des Sitzoberteiles 2 in Richtung weg von dem Sitzunterteil 1 entgegenwirkt. Mittels der Beaufschlagung des Abrollzylinders 512 mit einem derartigen Torsionsdrehmoment ist der Gurt 511 stets vorgespannt, wodurch vermieden werden kann, dass beim Einfedern, das heißt bei einer Bewegung des Sitzoberteiles 2 in Richtung des Sitzunterteiles 1, der Gurt schlaff herunterhängt.

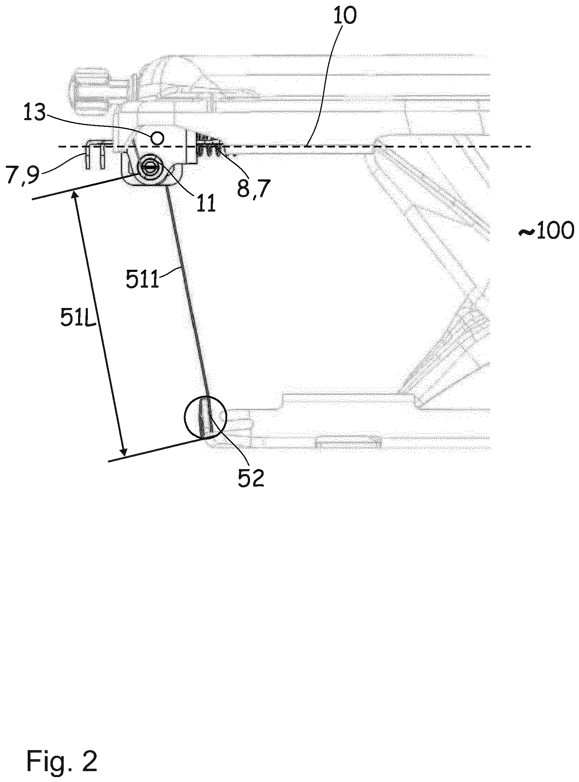

In der Figur 2 ist der Fahrzeugsitz 100 gemäß der Figur 1 in einer Ausschnittdarstellung, insbesondere die darin angeordnete Schwingbegrenzungseinrichtung 5, deutlicher dargestellt. Erkennbar ist, dass die Schwingbegrenzungseinrichtung 5 ein Einstellmittel 7 umfasst, mittels der die Abrolllänge 51L vorgebbar eingestellt werden kann. Dabei umfasst das Einstellmittel 7 eine Vorspannfeder 8 und einen einrastbaren Griff 9, wobei die Vorspannfeder 8 den Griff 9 mit einem Zug in Richtung zu sich hin, entlang einer Einstellachse 10 des Einstellmittels 7, beaufschlagt. Der Griff 9 ist entlang der Einstellachse 10 durch Beaufschlagung eines äußeren Zugs in Richtung weg von der Vorspannfeder 8 von einem Zu-Modus 91 in einen Offen-Modus 92 betreibbar, wobei im Offen-Modus 92 die Abrolllänge 51L einstellbar und im Zu-Modus 91 die Abrolllänge 51L durch ein Einrasten des Griffs 9 in eine Einrastvorrichtung 11 fixiert ist. Vorliegend ist die Einrastvorrichtung 11 Bestandteil der Schwingbegrenzungseinrichtung 5. Zum Einstellen der Abrolllänge 51L kann sich der Fahrer zunächst auf das Sitzoberteil 2 setzen, wodurch dieses in Richtung des Sitzunterteiles 1 bewegt wird. Beim nächsten Schritt kann der Griff 9 in den Offen-Modus 92 herausgezogen werden. Durch das Herausziehen des Griffs 9 wird die Einrastung der Einrastvorrichtung 11 an dem Abrollzylinder 512 gelöst, wodurch der Abrollzylinder 511 frei wird und über das Torsionsdrehmoment der Abrollzylinder 512 den Gurt 511 aufrollt. Ist eine gewünschte Abrolllänge 51L erreicht, kann der Griff 9 in Richtung der Vorspannfeder 8 zugedrückt und in den Zu-Modus 91 gebracht werden. Mit anderen Worten ist im Zu-Modus 91 die Einrastvorrichtung 11 in den Abrollzylinder 512 eingerastet. Dies führt zu einer besonders einfachen und kostengünstigen Realisierung der Einstellung der Abrolllänge 51L.

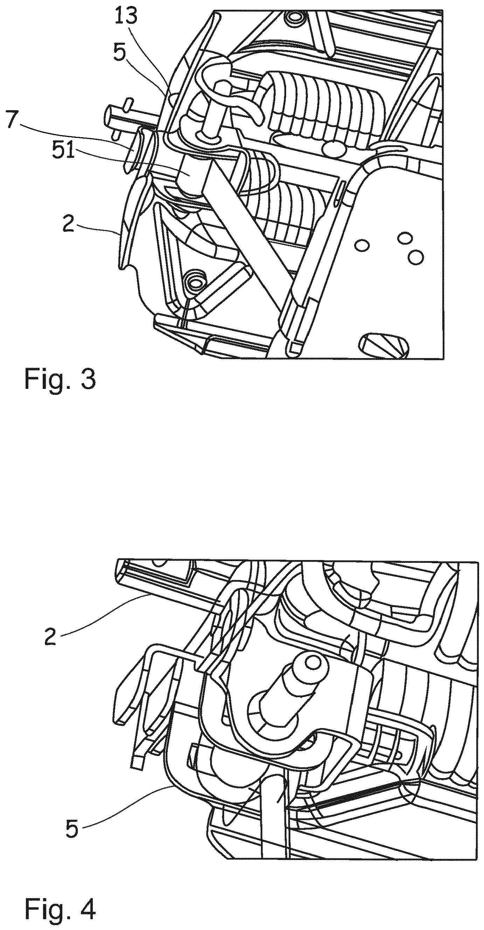

In den Figuren 3 und 4 ist jeweils in einer schematisch perspektivischen Unten-Ansicht die Schwingbegrenzungseinrichtung 5 der Figuren 1 und 2 gezeigt. Es ist nun erkennbar, dass die Schwingbegrenzungseinrichtung 5 ein Lager 13 aufweist, in dem das Abrollelement 51 und das Einstellmittel 7 angeordnet und gelagert sind. Das Abrollelement 51 ist in dem Lager 13 drehbar in der Abrollachse 51A geführt, wobei das Einstellmittel 7 in das Abrollelement 51 eingreifbar angeordnet ist. Erkennbar ist wiederum, dass der Griff 9 entlang der Einstellachse 10, welche vorliegend in horizontaler Richtung senkrecht zu der Abrollachse 51A verläuft, bewegbar ist. Über das Lager 13 ist die gesamte Schwingbegrenzungseinrichtung 5 fest mit dem Sitzoberteil 2 verbunden.

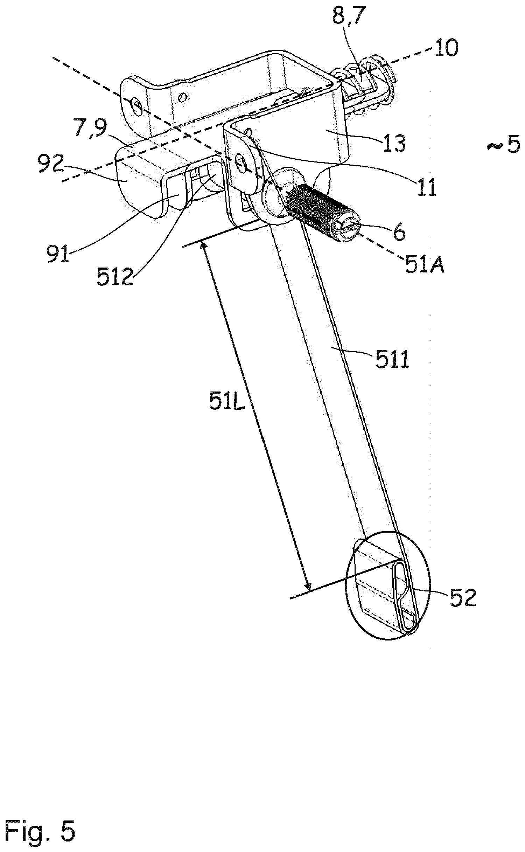

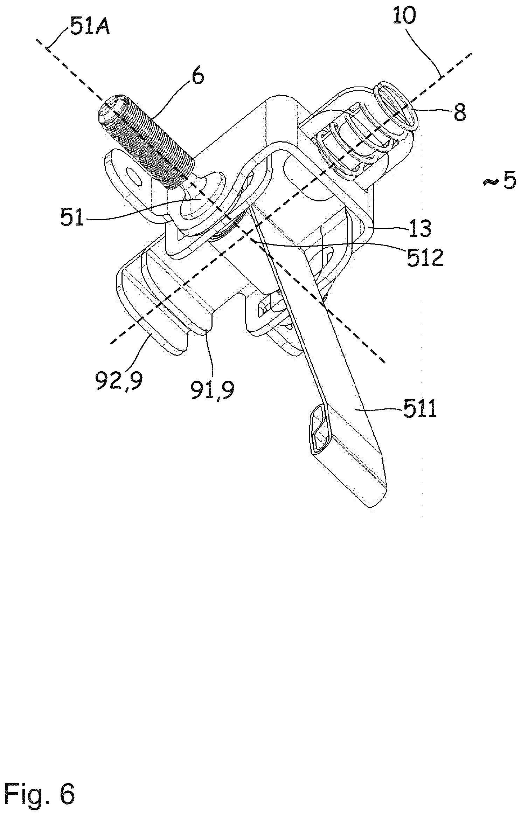

Die Figuren 5 und 6 zeigen in zwei weiteren perspektivischen Ansichten die in allen vorhergehenden Figuren gezeigte Schwingbegrenzungseinrichtung 5. Aus diesen Figuren ist besonders einfach der Abrollzylinder 512 erkennbar, über welchen der Gurt 511 abrollbar ist.

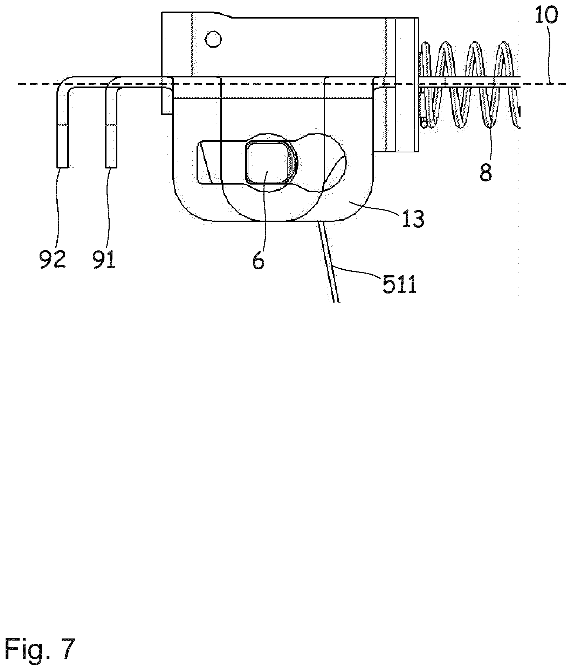

Die Figur 7 zeigt in einer schematischen Seitenansicht diese Schwingergänzungseinrichtung 5 nochmals. Hierbei wird deutlich, dass mittels der Bewegung des Griffes 9 entlang der Einstellachse 10 dieser durch Zusammendrücken der Vorspannfeder 8 von dem Offen-Modus 92 in den Zu-Modus 91 gebracht werden kann.

### Bezugszeichenliste

- 1: Sitzunterteil
- 2: Sitzoberteil
- 3: Sitzverbindungseinheit
- 4: Montagepunkte
- 5: Schwingbegrenzungseinrichtung
- 51: Abrollelement
- 51A: Abrollachse
- 51L: Abrolllänge
- 511: Gurt
- 512: Abrollzylinder
- 6: Drehfeder
- 7: Einstellmittel
- 8: Vorspannfeder
- 9: Griff
- 91: Zu-Modus
- 92: Offen-Modus
- 10: Einstellachse
- 11: Einrastvorrichtung
- 12: Scherengestell
- 12a, 12b: Scherenarme
- 13: Lager
- 100: Fahrzeugsitz

## Patentansprüche

1. Fahrzeugsitz (100), umfassend ein Sitzunterteil (1), sowie eine zwischen einem Sitzoberteil (2) und dem Sitzunterteil (1) angeordnete, höhenverstellbare Sitzverbindungseinheit (3), welche das Sitzunterteil (1) mit dem Sitzoberteil (2) mechanisch miteinander verbindet, mit zumindest einer Schwingbegrenzungseinrichtung (5), zum Begrenzen einer vertikalen Schwingbewegung des Sitzoberteils (2), in einer Richtung weg von dem Sitzunterteil (1), welche zwischen dem Sitzunterteil (1) und dem Sitzoberteil (2) angeordnet und fest mit dem Sitzoberteil (2) verbunden ist, wobei die Schwingbegrenzungseinrichtung (5) zumindest ein Abrollelement (51) aufweist und dazu eingerichtet und dazu vorgesehen ist eine Bewegung des Sitzoberteils (2) in vertikaler Richtung, in Richtung weg von dem Sitzunterteil (1), nach dem Abrollen einer vorgebbaren Abrolllänge (51L) dämpfungsfrei zu begrenzen,
**dadurch gekennzeichnet, dass**
die Schwingbegrenzungseinrichtung (5) ein Einstellmittel (7) umfasst, welches dazu eingerichtet und dazu vorgesehen ist, die Abrolllänge (51L) vorgebbar einzustellen und dämpfungsfrei zu begrenzen, und wobei das Abrollelement (51), welches mit seinem freien, abrollbaren Abrollende (52) mechanisch fest am Sitzunterteil (1) befestigt ist, eine mittels des Einstellmittels (7), umfassend eine Vorspannfeder (8) und einen einrastbaren Griff (9), vorgebbare Abrolllänge (51L) aufweist, und die Abrolllänge (51L) eine maximale Auslenkhöhe in vertikaler Richtung, in Richtung weg von dem Sitzunterteil (1), des Sitzoberteils (2) festlegt, wobei die Vorspannfeder (8) den Griff (9) mit einem Zug oder Druck entlang einer Einstellachse (10) des Einstellmittels (7) beaufschlagt.

2. Fahrzeugsitz (100) nach Anspruch 1,
**dadurch gekennzeichnet, dass**
das Abrollelement (51) mit einem abrollbaren Gurt (511) gebildet ist, welcher abrollbar auf einem Abrollzylinder (512) des Abrollelements (51) um eine Abrollachse (51A) auf- und abwickelbar ist.

3. Fahrzeugsitz (100) nach Anspruch 2,
**dadurch gekennzeichnet, dass**
die Schwingbegrenzungseinrichtung (5) eine Drehfeder (6) umfasst, welche dazu eingerichtet und dazu vorgesehen ist, den Abrollzylinder (512) mit einem Torsionsdrehmoment zu beaufschlagen, welches der vertikalen Bewegung des Sitzoberteils (2) in Richtung weg von dem Sitzunterteil (1) entgegenwirkt.

4. Fahrzeugsitz (100) nach einem der vorhergehenden Ansprüche,
**dadurch gekennzeichnet, dass**
der Griff (9) entlang der Ein-stellachse (10) durch Beaufschlagung eines äußeren Zug oder Drucks auf den Griff (9) in Richtung hin oder weg von der Vorspannfeder (8) in einem Zu-Modus (91) und in einem Offen-Modus (92) betreibbar ist, wobei im Offen-Modus (92) die Abrolllänge (51L) einstellbar und im Zu-Modus die Abrolllänge (51L) durch ein Einrasten des Griffs (9) in eine Einrastvorrichtung (11) fixiert ist.

5. Fahrzeugsitz (100) nach Anspruch 4,
**dadurch gekennzeichnet, dass**
die Schwingbegrenzungseinrichtung (5) ein Lager (13) aufweist, in dem das Abrollelement (51) und das Einstellmittel (7) angeordnet sind, wobei in dem Lager (13) das Abrollelement (51) drehbar in der Abrollachse (51A) geführt ist, und das Einstellmittel (7), in das Abrollelement (51) eingreifbar, angeordnet ist.

6. Fahrzeugsitz (100) nach einem der vorhergehenden Ansprüche,
**dadurch gekennzeichnet, dass**
die Sitzverbindungseinheit (3) mit einem Scherengestell (12) mit zumindest zwei Scherenarmen (12a, 12b) gebildet ist.

## Claims

1. Vehicle seat (100) comprising a lower seat part (1) and a vertically adjustable seat connection unit (3), which unit is arranged between an upper seat part (2) and the lower seat part (1) and mechanically interconnects the lower seat part (1) and the upper seat part (2), said seat also comprising at least one oscillation limiting device (5) for limiting a vertical oscillatory motion of the upper seat part (2) in a direction away from the lower seat part (1), which device is arranged between the lower seat part (1) and the upper seat part (2) and is rigidly connected to the upper seat part (2), the oscillation limiting device (5) comprising at least one reeling off element (51) and being designed and intended for limiting, in a non-damped manner, a vertical movement of the upper seat part (2) in a direction away from the lower seat part (1) after reeling off for a presettable reeling off length (51L),
**characterised in that**
the oscillation limiting device (5) comprises an adjusting means (7) which is designed and intended for presettably adjusting the reeling off length (51L) and for limiting said reeling off length in a non-damped manner, the reeling off element (51), the free, rollable reeling off end (52) of which is mechanically rigidly connected to the lower seat part (1), having a reeling off length (51L) that can be specified by the adjusting means (7), which means comprises a bias spring (8) and a lockable grip (9), the reeling off length (51L) determining a maximum deflection height of the upper seat part (2) in the vertical direction, in the direction away from the lower seat part (1), the bias spring (8) applying traction or compression to the grip (9) along an adjustment axis (10) of the adjusting means (7).

2. Vehicle seat (100) according to claim 1,
**characterised in that**
the reeling off element (51) is formed with a rollable belt (511) which can be wound onto and unwound from a reeling off cylinder (512) of the reeling off element (51) about a reeling off axis (51A).

3. Vehicle seat (100) according to claim 2,
**characterised in that**
the oscillation limiting device (5) comprises a torsion spring (6) which is designed and intended for applying a torsional moment to the reeling off cylinder (512), which torsional moment counteracts the vertical movement of the upper seat part (2) in the direction away from the lower seat part (1).

4. Vehicle seat (100) according to any of the preceding claims,
**characterised in that**
the grip (9) can be operated along the adjustment axis (10) in a closed mode (91) and in an open mode (92) by external traction or compression being applied to the grip (9) in the direction towards or away from the bias spring (8), the reeling off length (51L) being adjustable in the open mode (92) and the reeling off length (51L) being fixed in the closed mode by means of the grip (9) engaging in an engagement device (11).

5. Vehicle seat (100) according to claim 4,
**characterised in that**
the oscillation limiting device (5) comprises a bearing (13) in which the reeling off element (51) and the adjusting means (7) are arranged, the reeling off element (51) being rotatably guided within the reeling off axis (51A) in the bearing (13), and the adjusting means (7) being arranged so as to be able to engage in the reeling off element (51).

6. Vehicle seat (100) according to any of the preceding claims,
**characterised in that**
the seat connection unit (3) is formed with a scissors frame (12) comprising at least two scissors arms (12a, 12b).

## Revendications

1. Siège de véhicule (100), comportant une partie inférieure de siège (1), ainsi qu'une unité de liaison de siège (3) réglable en hauteur, qui est disposée entre une partie supérieure de siège (2) et la partie inférieure de siège (1) et qui relie entre elles de manière mécanique la partie inférieure de siège (1) à la partie supérieure de siège (2), avec au moins un dispositif (5) de limitation des oscillations, pour limiter un mouvement oscillant vertical de la partie supérieure de siège (2), dans une direction s'éloignant de la partie inférieure de siège (1), qui est disposé entre la partie inférieure de siège (1) et la partie supérieure de siège (2) et est lié rigidement à la partie supérieure de siège (2), le dispositif (5) de limitation des oscillations présentant au moins un élément de déroulement (51) et étant configuré et prévu pour limiter sans amortissement un mouvement de la partie supérieure de siège (2) en direction verticale, dans une direction s'éloignant de la partie inférieure de siège (1), après le déroulement d'une longueur de déroulement (51L) prédéterminée,
**caractérisé par le fait que**
le dispositif (5) de limitation des oscillations comporte un moyen de réglage (7), qui est configuré et prévu pour régler de manière prédéfinie et limiter sans amortissement la longueur de déroulement (51L), et dans lequel l'élément de déroulement (51), qui est fixé fermement de manière mécanique sur la partie inférieure de siège (1) par son extrémité de déroulement (52) déroulable, libre, présente une longueur de déroulement (51L) prédéfinissable, à l'aide du moyen de réglage (7), comportant un ressort de précontrainte (8) et une poignée encliquetable (9), et la longueur de déroulement (51L) définit une hauteur de déplacement maximale en direction verticale, dans la direction s'éloignant de la partie inférieure de siège (1), de la partie supérieure de siège (2), le ressort de précontrainte (8) appliquant une traction ou une pression à la poignée (9) le long d'un axe de réglage (10) du moyen de réglage (7).

2. Siège de véhicule (100) selon la revendication 1,
**caractérisée par le fait que**
l'élément de déroulement (51) est formé avec une ceinture (511) déroulable, laquelle peut être enroulée et déroulée autour d'un axe de déroulement (51A) sur un cylindre de déroulement (512) de l'élément de déroulement (51).

3. Siège de véhicule (100) selon la revendication 2,
**caractérisé par le fait que**
le dispositif (5) de limitation des oscillations comporte un ressort de torsion (6), lequel est configuré et prévu pour appliquer un couple de torsion au cylindre de déroulement (512), lequel s'oppose au mouvement vertical de la partie supérieure de siège (2) dans la direction s'éloignant de la partie inférieure de siège (1).

4. Siège de véhicule (100) selon l'une des revendications précédentes,
**caractérisé par le fait que**
la poignée (9) est actionnable le long de l'axe de réglage (10) par application d'une traction ou d'une pression extérieure sur la poignée (9) dans une direction vers le ressort de précontrainte (8) ou s'éloignant de celui-ci dans un mode fermé (91) et dans un mode ouvert (92), où, dans le mode ouvert (92), la longueur de déroulement (51L) est réglable et, dans le mode fermé, la longueur de déroulement (51L) est fixée par un encliquetage de la poignée (9) dans un dispositif d'encliquetage (11).

5. Siège de véhicule (100) selon la revendication 4,
**caractérisé par le fait que**
le dispositif (5) de limitation des oscillations présente un palier (13), dans lequel sont disposés l'élément de déroulement (51) et le moyen de réglage (7), où, dans le palier (13), l'élément de déroulement (51) est guidé de manière rotative dans l'axe de déroulement (51A), et le moyen de réglage (7) est disposé susceptible d'être engagé dans l'élément de déroulement (51).

6. Siège de véhicule (100) selon l'une des revendications précédentes,
**caractérisé par le fait que**
l'unité (3) de liaison de siège comporte un cadre à ciseaux (12) avec au moins deux bras de ciseaux (12a, 12b).
